# EUROPEAN PATENT SPECIFICATION

(11) **EP 3 837 803 B1**
(45) Date of publication and mention of the grant of the patent: **25.06.2025**
(21) Application number: 18769710.7
(22) Date of filing: 14.09.2018
(51) Int. Cl.: H04L 9/08

(54) **QUANTUM KEY DISTRIBUTION SYSTEM AND METHOD**
QUANTENSCHLÜSSELVERTEILUNGSSYSTEM UND -VERFAHREN
SYSTÈME ET PROCÉDÉ DE DISTRIBUTION QUANTIQUE DE CLÉ

(43) Date of publication of application: 23.06.2021
(73) Proprietor: Huawei Technologies Duesseldorf GmbH, 40549 Düsseldorf (DE)
(72) Inventor: FUNG, Fred, Chi, Hang, 80992 Munich (DE); SCHRENK, Bernhard, 1210 Vienna (AT); HÜBEL, Hannes, 1210 Vienna (AT)
(74) Representative: Epping - Hermann - Fischer
(86) International application number: PCT/EP2018/074966
(87) International publication number: WO 2020/052787

(56) References cited:
- US-A- 5 768 378
- YI-CHEN ZHANG ET AL: "Continuous-variable QKD over 50km commercial fiber", ARXIV.ORG, CORNELL UNIVERSITY LIBRARY, 201 OLIN LIBRARY CORNELL UNIVERSITY ITHACA, NY 14853, 14 September 2017 (2017-09-14), XP080821022
- ELENI DIAMANTI ET AL: "Distributing Secret Keys with Quantum Continuous Variables: Principle, Security and Implementations", ENTROPY, vol. 17, no. 12, 31 August 2015 (2015-08-31), pages 6072 - 6092, XP055452367, DOI: 10.3390/e17096072
- KUMAVOR P D ET AL: "COMPARISON OF FOUR MULTI-USER QUANTUM KEY DISTRIBUTION SCHEMES OVER PASSIVE OPTICAL NETWORKS", JOURNAL OF LIGHTWAVE TECHNOLOGY, IEEE, USA, vol. 23, no. 1, 1 January 2005 (2005-01-01), pages 268 - 276, XP001227328, ISSN: 0733-8724, DOI: 10.1109/JLT.2004.834481

## Description

### TECHNICAL FIELD

The invention relates to the field of quantum key distribution. More specifically, the invention relates to a continuous variable quantum key distribution (CV QKD) system and method.

### BACKGROUND

Quantum key distribution (QKD) uses quantum carriers (also referred to as quantum signals), typically single-photon or strongly attenuated light pulses, for sharing a secret electronic key. Typically, a sequence of such light pulses, i.e. quantum signals, is transmitted from a transmitter (often referred to as "Alice") via a quantum channel to a receiver (often referred to as "Bob"), wherein each light pulse encodes a key bit. The quantum properties of light, in particular the Heisenberg uncertainty principle, ensure that no information can be gained on these key bits without disturbing the quantum state of the photons. Public communications over an additional classical channel are then used to estimate the maximum amount of information that a potential eavesdropper may have acquired, and to distil a secret key out of the raw data.

Several practical schemes for quantum key distribution have been proposed and implemented in the past, including discrete-variable (DV) and continuous-variable (CV) QKD are employed to distribute secret keys. DV-QKD is based on the principle of detecting individual photons, while CV-QKD is based on the principle of detecting the quadratures of light fields to obtain possibly more efficient alternatives to conventional photon-counting QKD techniques. From a practical point of view, the CV approach has potential advantages because it is compatible with the standard optical telecommunication technologies. It is foreseeable that this approach will become a viable candidate for large-scale secure quantum communications.

In discrete-variable quantum key distribution (DV-QKD), the transmitter and receiver devices differ greatly in their functionality. Whereas the production of optical quantum states is fairly easy (at least for approximate single photon states), the detection of said photonic states is hard and requires complicated single photon detectors which could be bulky and expensive. In access links it is therefore advantageous to have an expensive node connecting to the metropolitan network and inexpensive modules at the user side. Ideally, the expensive node should be able to cater for many users. In that way the cost of deployment per user can be kept low.

For continuous-variable quantum key distribution (CV-QKD), there is also an imbalance between the transmitter and receiver. The transmitter generally requires a fast random number generator, optical modulators and DAC converters. At the receiving side, the main components are the optical hybrid, a balanced detector and ADC card. Although not directly obvious in the CV-QKD case, the receiver is actually the cheaper component at least for small bandwidth transmission. ADC and balanced detectors for GHz transfer rates are very expensive, whereas rates below 100 MHz can be accommodated with modest cost in equipment. Therefore, in a CV-QKD system the receiver should constitute the device at the end-user.

This leaves still open the question of how to link multi users (receivers) to a single transmitter, in particular for sharing an individual secret key between a transmitter and each of a plurality of users, i.e. receivers.

A simple solution to multiuser QKD is to set up independent QKD links between any pair of parties who need to generate QKD keys. But this setup is complicated and resource intensive.

So far multiuser QKD has been only attempted with either active switching or wavelength-division multiplexing (WDM techniques). For DV-QKD, passive optical splitting has been proposed, but the operational characteristics are different. In active switching the quantum channel is always linked with one receiver. When another receiver wants to communicate with the transmitter an optical switch changes the quantum channel from the old user to the new user. With active optical switching, problems arise with the complexity and maintenance of the switch. Also the active switching prevents multi users of receiving data simultaneously, since the switching only connects different users sequentially. This leads to a poor usage of the quantum channel, since the maximum key generation rate is that of a single link. Also, due to the complete severing of the quantum channel, important control signals, used for alignment of the CV-QKD system, can no longer be transmitted to all users. Hence a long recalibration time is needed every time a user is connected to the transmitter.

WDM techniques were also employed with QKD. Although, being better than active switching in that WDM increases the bandwidth by combining more optical quantum channels on a single fiber, it is still very rigid. Additional users can only connect if there is a spare WDM channel free. The wavelength selection of the channel cannot be modified without changing optical components at the receiver.

DV-QKD on PON (passive optical network) relies on single photons being redirected at the optical splitter to reach the different users. Since a photon cannot be split, it is detected by one user only. It is not possible to split the quantum signal for detection by multiple users, which is useful for secret sharing among multiple users.

Thus, there is still a need for an improved QKD system as well as a method operating such a system for sharing an individual secret key between a transmitter and each of a plurality of receivers in a secure manner.

US 5768378 A discloses a method of quantum cryptography, wherein a transmitter communicates on a quantum channel with several receivers. The receivers are located on different branches of a common communications network. The method establishes a different respective secret key over a secure quantum channel that is a channel carried by single-photon signals for each receiver. A timing pulse may be transmitted from the transmitter to the receivers to synchronise the receivers prior to a transmission on a quantum channel. The quantum channel may be multiplexed and transmitted concurrently with classical multi-photon transmissions on the network.

Eleni Diamanti et al., "Distributing Secret Keys with Quantum Continuous Variables: Principle, Security and Implementations", Entropy, vol. 17, no. 12, 31 August 2015, pages 6072-6092, describes the principle of continuous-variable quantum key distribution, focusing in particular on protocols based on coherent states. The authors discuss the security of these protocols and report on the state-of-the-art in experimental implementations, including the issue of side-channel attacks, is discussed.

Yi-Chen Zhang et al., "Continuous-variable QKD over 50km commercial fiber", arxiv.org, Cornell University Library, 201 OLIN Library Cornell University Ithaca, NY 14853, 14 September 2017, also discloses CV-QKD, with a local oscillator sent combined with the quantum signal, in a one-on-one communication.

Kumavor et al., "Comparison of four multi-user quantum key distribution schemes over passive optical networks", Journal of lightwave technology, IEEE, USA, vol. 23, no. 1, 1 January 2005, pages 268-276, compares the performance of four multi-user quantum key distribution schemes over passive optical networks. A passive-star network is shown, where a transmitter transmitting single photons is linked to a plurality of receivers. Due to the indivisible nature of the photon, each photon is randomly routed to a single user by a splitter.

### SUMMARY

The foregoing and other objects are achieved by the subject matter of the independent claims. Further implementation forms are apparent from the dependent claims, the description and the figures.

According to a first aspect the invention relates to a continuous variable quantum key distribution, CV-QKD, system, comprising: a transmitter comprising a modulator configured to modulate a quantum signal according to a continuous or discrete distribution in phase and amplitude; a beam splitter configured to split the modulated quantum signal into a plurality of modulated quantum sub-signals, wherein each modulated quantum sub-signal is an attenuated version of the modulated quantum signal; and a plurality of receivers. Each receiver is configured to: receive via a respective quantum communication channel a respective modulated quantum sub-signal from the beam splitter; determine a plurality of phase space positions defined by a plurality of quadrature components of the respective modulated quantum sub-signal; and determine a respective individual secret key between the respective receiver and the transmitter on the basis of the plurality of phase space positions by carrying out a post-processing procedure, wherein the post-processing procedure comprises a reverse reconciliation procedure.

Thus, an improved CV-QKD system is provided for sharing an individual secret key between a transmitter and each of a plurality of receivers in a secure manner. In a further possible implementation form of the first aspect, the transmitted quantum state is a coherent state. In contrast to DV-QKD which is based on single photons, the quantum coherent states used in CV-QKD can be split indefinitely. Each receiver may be configured to carry out the reverse reconciliation procedure in cooperation with the transmitter, e.g., in accordance with a reverse reconciliation protocol.

The beam splitter can be a beam splitter integrated in or connected to an optical fibre cable, e.g., a beam splitter commonly referred to in the art as a coupler. The beam splitter is a passive beam splitter.

In a further possible implementation form of the first aspect, the reverse reconciliation procedure includes sending error correction information from each respective receiver to the transmitter via a respective classical communication channel.

In a further possible implementation form of the first aspect, the transmitter is configured to determine the respective individual secret key on the basis of the error correction information.

In a further possible implementation form of the first aspect, the transmitter is configured to perform the reverse reconciliation procedure with two or more of the receivers in parallel. Each of the two or more receivers may be associated with an instance of a reverse reconciliation protocol, and the respective receiver and the transmitter may cooperate in accordance with that instance of the reverse reconciliation protocol.

In a further possible implementation form of the first aspect, the transmitter is configured to perform the reverse reconciliation procedure with two or more of the receivers using time-multiplexing.

In a further possible implementation form of the first aspect, two or more of the modulated quantum sub-signals have the same signal power.

In a further possible implementation form of the first aspect, at least two of the modulated quantum sub-signals have different signal powers.

The transmitter is configured to transmit a synchronization signal via the beam splitter to each of the plurality of receivers. The synchronization signal can comprise, for instance, frequency and phase information.

The transmitter is configured to transmit the synchronization signal together, i.e. simultaneously with the modulated quantum signal via the beam splitter to each of the plurality of receivers. For example, the synchronization signal may be transmitted in the horizontal polarization and the modulated quantum signal in the vertical polarization. Furthermore, the synchronization signal and the modulated quantum signal can be separated in frequency but are transmitted in the same polarization and time.

In a further possible implementation form of the first aspect, the transmitter comprises a random number generator for generating the quantum signal.

In a further possible implementation form of the first aspect, the post-processing procedure further includes a sifting procedure, a parameter estimation procedure, an information reconciliation procedure and/or a privacy amplification procedure.

In a further possible implementation form of the first aspect, each receiver comprises a homodyne detector or a heterodyne detector for determining the plurality of phase space positions defined by the plurality of quadrature components of the respective modulated quantum sub-signal.

According to a second aspect the invention relates to a passive optical network, PON, comprising the CV-QKD system according to the first aspect of the invention.

According to a third aspect the invention relates to a continuous variable quantum key distribution, CV-QKD, method. The CV-QKD method comprises the following steps: modulating a quantum signal according to a continuous or discrete distribution in phase and amplitude by a transmitter; splitting the modulated quantum signal into a plurality of modulated quantum sub-signals, using a passive beam splitter, wherein each modulated quantum sub-signal is an attenuated version of the modulated quantum signal; and operating each receiver of a plurality of receivers to: receive one of the modulated quantum sub-signals via a quantum communication channel; determine a plurality of phase space positions defined by a plurality of quadrature components of the modulated quantum sub-signal; and determine an individual secret key between the respective receiver and the transmitter on the basis of the plurality of phase space positions using a post-processing procedure, wherein the post-processing procedure comprises a reverse reconciliation procedure.

For each of the receivers, the reverse reconciliation procedure comprises sending error correction information via a classical communication channel from the receiver to the transmitter. The transmitter is thus enabled to determine the individual secret key for communication with that receiver.

The CV-QKD method according to the third aspect of the invention can be performed by the CV-QKD system according to the first aspect of the invention. Further features of the CV-QKD method according to the third aspect of the invention result directly from the functionality of the CV-QKD system according to the first aspect of the invention and its different implementation forms described above and below.

The invention can be implemented in hardware and software.

### BRIEF DESCRIPTION OF THE DRAWINGS

Further embodiments of the invention will be described with respect to the following figures, wherein:
Fig. 1 shows a schematic diagram illustrating a CV QKD system according to an embodiment of the invention;
Fig. 2 shows a schematic diagram illustrating a CV QKD system according to an embodiment of the invention;
Fig. 3 shows a schematic diagram illustrating some more details of the CV QKD systems of figure 1 and 2; and
Fig. 4 shows a flow diagram illustrating a method of operating a CV QKD system according to an embodiment of the invention.

In the various figures, identical reference signs will be used for identical or at least functionally equivalent features.

### DETAILED DESCRIPTION OF THE EMBODIMENTS

In the following description, reference is made to the accompanying drawings, which form part of the disclosure, and in which are shown, by way of illustration, specific aspects in which the invention may be placed. It is understood that other aspects may be utilized and structural or logical changes may be made without departing from the scope of the invention. The following detailed description, therefore, is not to be taken in a limiting sense, as the scope of the invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

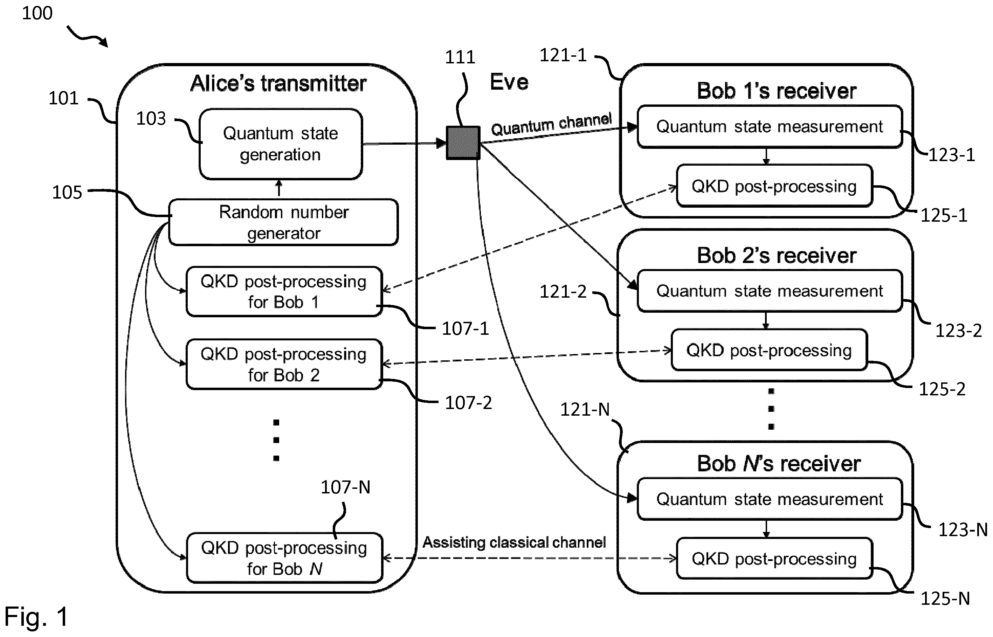

Figure 1 shows a CV-QKD system 100 according to an embodiment. The CV-QKD system 100 comprises a transmitter 101 (also referred to as "Alice") and a plurality of receivers 121-1, 121-2, 121-N (also referred to as "Bob 1", Bob 2" ... "Bob N"). The CV-QKD system 100 could be implemented, for instance, as a component of a passive optical network (PON).

The transmitter 101 comprises a modulator 103 (referred to as quantum state generation in figure 1) configured to modulate a quantum coherent signal according to a continuous or discrete distribution in phase and amplitude. As illustrated in figure 1, the quantum signal could be based on a sequence of random numbers provided by a random number generator 105 of the transmitter 101. As will be appreciated, in contrast to DV-QKD which is based on single photons, the quantum coherent states used in CV-QKD can be split indefinitely.

Moreover, the CV-QKD system 100 comprises a splitter 111. The splitter 111 is a passive beam splitter 111. The splitter 111 is configured to split the modulated quantum signal provided by the modulator 103 of the transmitter 111 into a plurality of modulated quantum sub-signals. Each modulated quantum sub-signal is an attenuated version of the modulated quantum signal.

The beam splitter 111 can be a beam splitter integrated in or connected to an optical fibre cable, e.g., a beam splitter commonly referred to in the art as a coupler. In an embodiment, the splitter 111 can be implemented as part of the transmitter 100. In an embodiment, the splitter 111 can be configured to split the modulated quantum signal provided by the modulator 103 of the transmitter 111 in such a way that each of the plurality of modulated quantum sub-signals has the same signal power. Alternatively, the splitter 111 can be configured to split the modulated quantum signal provided by the modulator 103 of the transmitter 111 in such a way that at least two of the plurality of modulated quantum sub-signals have different signal powers.

Each receiver 121-1, 121-2, 121-N is configured to receive via a respective quantum communication channel the respective modulated quantum sub-signal from the splitter 111 and to determine a plurality of phase space positions defined by a plurality of quadrature components of the respective modulated quantum sub-signal. In the embodiment shown in figure 1, the plurality of phase space positions can be determined by a respective quantum state measurement unit 123-1, 123-2, 123-N of the respective receiver 121-1, 121-2, 121-N. In an embodiment, the respective quantum state measurement unit 123-1, 123-2, 123-N of the respective receiver 121-1, 121-2, 121-N can comprise a homodyne detector 123-1, 123-2, 123-N or a heterodyne detector 123-1, 123-2, 123-N for determining the plurality of phase space positions defined by the plurality of quadrature components of the respective modulated quantum sub-signal.

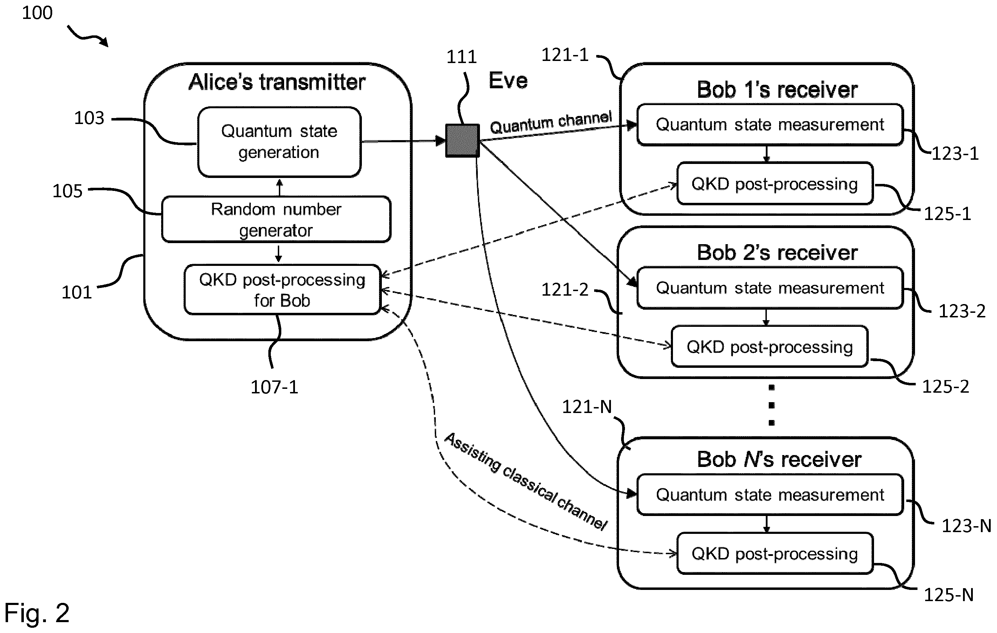

Moreover, each receiver 121-1, 121-2, 121-N is configured to determine a respective individual secret key between the respective receiver 121-1, 121-2, 121-N and the transmitter 101 on the basis of the plurality of phase space positions by carrying out a post-processing procedure (implemented in a respective QKD post-processing unit 125-1, 125-2, 125-N of each receiver 121-1, 121-2, 121-N), wherein the post-processing procedure comprises a reverse reconciliation procedure, as will be described in more detail below in the context of figure 2. Each receiver 121-1, 121-2, 121-N may be configured to carry out the reverse reconciliation procedure in cooperation with the transmitter 101, e.g., in accordance with a reverse reconciliation protocol.

In an embodiment, the reverse reconciliation procedure includes sending error correction information from each respective receiver 121-1, 121-2, 121-N to the transmitter 101 via a respective classical communication channel, which allows the transmitter 101 to determine the respective individual secret key on the basis of the error correction information.

In an embodiment, the transmitter 101 is configured to execute at least some of the plurality of post-processing protocols, in particular a reverse reconciliation procedure with at least some of the plurality of receivers 121-1, 121-2, 121-N in parallel, e.g., by implementing for at least some of the receivers 121-1, 121-2, 121-N a corresponding plurality of instances of the post-processing protocol. To this end, the transmitter 101 of the embodiment shown in figure 1 implements a plurality of QKD post-processing units or instances 107-1, 107-2, 107-N for executing the plurality of post-processing protocols, in particular the reverse reconciliation procedure thereof with at least some of the plurality of receivers 121-1, 121-2, 121-N in parallel. In other words, the instances of QKD post-processing 107-1, 107-2, 107-N at the transmitter 101 can run independently of each other and each instance can communicate with the associated receiver 121-1, 121-2, 121-N over a classical channel to produce the individual secret key. The multiple receivers 121-1, 121-2, 121-N can also operate independently of each other. Each receiver 121-1, 121-2, 121-N essentially can treat the other receivers 121-1, 121-2, 121-N as eavesdroppers tapping off part of the signal sent by the transmitter 101. The measurement results of different receivers 121-1, 121-2, 121-N are in general different even though they are derived from the same signal because they suffer from different quantum shot noises which are inherent in the quantum light fields. The final individual secret key each receiver 121-1, 121-2, 121-N produces will be secret to the other receivers 121-1, 121-2, 121-N.

A further possible embodiment is shown in figure 2, where the transmitter 101 comprises a QKD post-processing unit 107, which is configured to execute the plurality of post-processing protocols, including the respective reverse reconciliation procedure with the plurality of receivers 121-1, 121-2, 121-N using a time-multiplexing scheme. Thus, at a single moment, the QKD post-processing unit 107 of the transmitter 101 communicates with the respective QKD post-processing unit 125-1, 125-2, 125-N of one receiver 121-1, 121-2, 121-N. The transmitter 101 may take turns to communicate with all receivers 121-1, 121-2, 121-N. In an embodiment, the QKD post-processing unit 107 of the transmitter 101 is configured to keep track of which receiver 121-1, 121-2, 121-N it is communicating with.

The transmitter 101 is further configured to transmit a synchronization signal (e.g., a pilot tone) via the splitter 111 to each of the plurality of receivers 121-1, 121-2, 121-N. The synchronization signal can include, for instance, frequency and/or phase information about the modulated quantum signal. The transmitter 101 is configured to transmit the synchronization signal together, i.e. simultaneously with the modulated quantum signal via the beam splitter 111 to each of the plurality of receivers 121-1, 121-2, 121-N. For example, the synchronization signal may be transmitted in the horizontal polarization and the modulated quantum signal in the vertical polarization. Furthermore, the synchronization signal and the modulated quantum signal can be separated in frequency but are transmitted in the same polarization and time. The synchronization signal can keep the transmitter 101 and the plurality of receivers 121-1, 121-2, 121-N in sync with each other. By using a passive splitter 111, the synchronization signal can always be active between the transmitter 101 and the plurality of receivers 121-1, 121-2, 121-N keeping them in sync all the time.

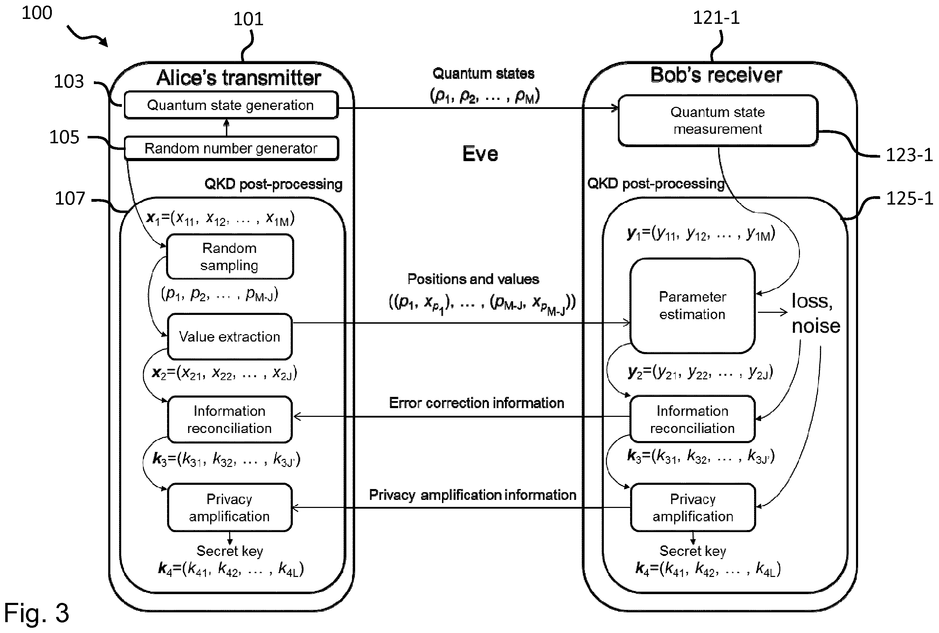

Figure 3 illustrates in more detail steps of the respective post-processing protocols between the transmitter 101 and one exemplary receiver 121-1 of the CV-QKD system 100 illustrated in figure 2 for determining the individual secret key between the transmitter 101 and the exemplary receiver 121-1, by way of an example. As will be appreciated, similar or the same steps can be implemented for the post-processing protocol between the transmitter 101 and each of the plurality of receivers 121-1, 121-2, 121-N of the CV-QKD system 100 illustrated in figure 1. Generally, in addition to the reverse reconciliation procedure already described above, the post-processing protocol(s) can further include a sifting stage, a parameter estimation stage and/or a privacy amplification stage.

As illustrated in figure 3 and already described above, the random number generator 105 of the transmitter 101 produces random numbers from which the quantum states (*ρ*₁, *ρ*₂, ... , *ρ*_{M}) to be transmitted and the associated sequence of numbers ***x₁***=(*x₁₁, x₁₂, ..., x_{1M})* to be used by the QKD post-processing unit 107 of the transmitter 101 are determined. Each number, for example, may be the index to a quantum state in a set of possible quantum states to be sent. The quantum states are sent over a quantum channel and an eavesdropper (referred to as Eve) may manipulate (including measuring) the quantum states in transmission and may gain information about them. The exemplary receiver 121-1 (i.e. "Bob") measures the quantum states it receives, e.g., using coherent detection to produce a respective sequence of numbers *y*₁=(*y*₁₁, *y*₁₂, ... , *y*_{1M}) representing the measurement results (also referred to as initial key). For simplicity it can be assumed that the data generated by the receiver 121-1 *y*₁ᵢ corresponds to the data *x*₁ᵢ determined by the transmitter 101. In a next stage, using the measurement results, the transmitter 101 and the receiver 121-1 can determine the channel characteristics such as the channel loss and the channel noise, by comparing a subset of their respective data. For example, the transmitter 101 may select random positions in the sequence ***x₁*** and inform the receiver 121-1 about the positions and the corresponding values. The receiver 121-1 can then compare them with its values in its sequence ***y₁*** at the same positions. Alternatively, the values of the key ***y*₁** at pre-determined positions are announced by the receiver 121-1 to the transmitter 101. The transmitter 101 compares these values with its values of the key ***x*₁** at the same positions to estimate the losses and noises of the channels of the receiver 121-1. Since the data at these positions are transmitted publicly via classical communication channels, they should be discarded from the further sequences ***x₂*** and ***y*₂** to be processed. The channel parameters determined by the transmitter 101 will be used in the subsequent post-processing stages, including the reverse reconciliation stage and the privacy amplification stage.

During the reverse reconciliation stage the transmitter 101 and the receiver 121-1 exchange error correction information to derive a common sequence of numbers ***k*₃**. In reverse reconciliation, which is used in the CV-QKD system 100 shown in figures 1 and 2, the sequence at the exemplary receiver 121-1 is considered to be correct and the transmitter 101 attempts to correct its respective sequence to match the sequence of the receiver 121-1 by using the respective error correction information provided by the receiver 121-1.

After establishing the same respective sequence ***k*₃**, the transmitter 101 and the respective receiver 121-1 can perform privacy amplification to remove the information about the sequence possibly obtained by an eavesdropper to form the final respective individual secret key ***k*₄**.

In an embodiment, all the communication involved in the QKD post-processing protocol(s) is done over a classical communication channel.

As will be appreciated, variations of the above described post-processing stages are possible, such as reversing the role of the transmitter 101 and the respective receiver 121-1 for parameter estimation and privacy amplification, e.g., the estimation of the losses and the noises of the channels may be performed not at the transmitter's side but at the receivers' sides. For instance, for parameter estimation the respective receiver 121-1 can pick the random positions and provide them to the transmitter 101 along with their values at those positions. Also as a variation, the channel parameters such as loss and noise levels may be communicated from the respective receiver 121-1 to the transmitter 101.

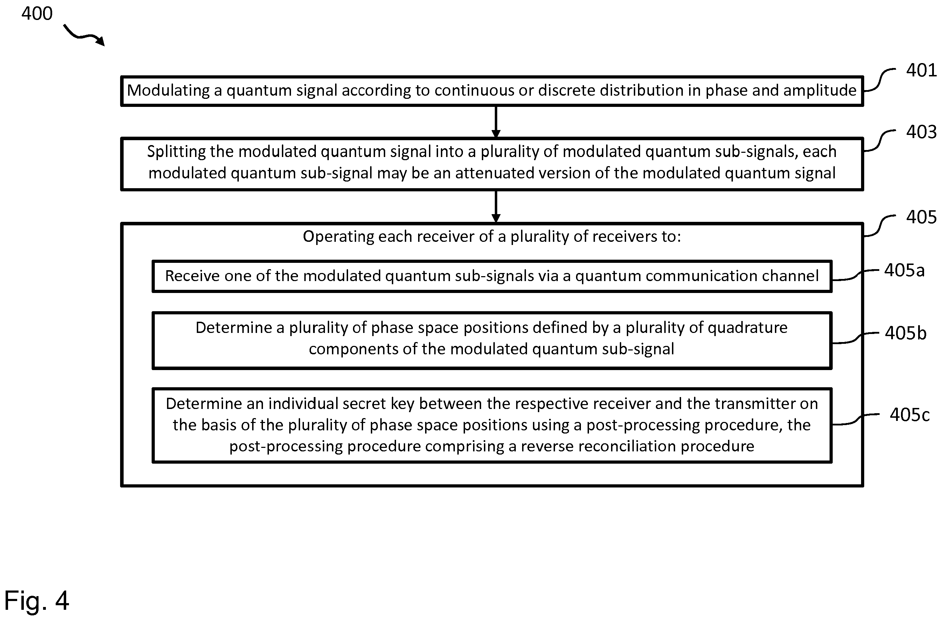

Figure 4 is a flow diagram showing an example of a corresponding CV-QKD method 400, comprising the following steps: modulating 401 a quantum signal according to a continuous or discrete distribution in phase and amplitude by the transmitter 101; splitting 403 the modulated quantum signal into a plurality of modulated quantum sub-signals, using the passive beam splitter 111, wherein each modulated quantum sub-signal is an attenuated version of the modulated quantum signal; and operating 405 each of the plurality of receivers 121-1, 121-2, 121-N to: receive 405a one of the modulated quantum sub-signals via a respective quantum communication channel; determine 405b a plurality of phase space positions defined by a plurality of quadrature components of the modulated quantum sub-signal; and determine 405c an individual secret key between the respective receiver 121-1, 121-2, 121-N and the transmitter 101 on the basis of the plurality of phase space positions using a post-processing procedure, wherein the post-processing procedure comprises a reverse reconciliation procedure. For each of the receivers 121-1, 121-2, 121-N, the reverse reconciliation procedure comprises sending error correction information via a respective classical communication channel from the receiver 121-1, 121-2, 121-N to the transmitter 101. The transmitter 101 is thus enabled to determine the individual secret key for communication with that receiver 121-1, 121-2, 121-N.

Some of the embodiments described above provide one or more of the following advantages: a single transmitter can exchange keys with many receivers; individual secret keys can be generated between the transmitter 101 and the plurality of receivers 121-1, 121-2, 121-N; only passive switching is required; only one wavelength-division multiplexing (WDM) optical channel needed for multiple users; synchronization signals may always be active, keeping the transmitter 101 and all receivers 121-1, 121-2, 121-N always in sync.

The person skilled in the art will understand that the "blocks" ("units") of the various figures (method and apparatus) represent or describe functionalities of embodiments of the invention (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

## Claims

1. A continuous variable quantum key distribution, CV-QKD, system (100), comprising:
a transmitter (101) comprising a modulator (103) configured to modulate a quantum signal according to a continuous or discrete distribution in phase and amplitude;
a beam splitter (111) configured to split the modulated quantum signal into a plurality of modulated quantum sub-signals, wherein the beam splitter (111) is a passive beam splitter (111), wherein each modulated quantum sub-signal is an attenuated version of the modulated quantum signal; and
a plurality of receivers (121-1, 121-2, 121-N),
wherein the transmitter (101) is configured to transmit a synchronization signal together with the modulated quantum signal via the beam splitter (111) to each of the plurality of receivers (121-1, 121-2, 121-N); and
wherein each receiver is configured to:
receive via a respective quantum communication channel a respective modulated quantum sub-signal from the beam splitter (111);
determine a plurality of phase space positions defined by a plurality of quadrature components of the respective modulated quantum sub-signal; and
determine an individual secret key on the basis of the plurality of phase space positions by carrying out a post-processing procedure, the post-processing procedure comprising a reverse reconciliation procedure.

2. The system (100) of claim 1, wherein the reverse reconciliation procedure includes sending error correction information from the respective receiver (121-1, 121-2, 121-N) to the transmitter (101) via a respective classical communication channel.

3. The system (100) of claim 2, wherein the transmitter (101) is configured to determine the respective individual secret key on the basis of the error correction information.

4. The system (100) of any one of the preceding claims, wherein the transmitter (101) is configured to perform the reverse reconciliation procedure with two or more of the receivers (121-1, 121-2, 121-N) in parallel.

5. The system (100) of any one of the preceding claims, wherein the transmitter (101) is configured to perform the reverse reconciliation procedure with two or more of the receivers (121-1, 121-2, 121-N) using time-multiplexing.

6. The system (100) of any one of the preceding claims, wherein the beam splitter (111) is configured to split the modulated quantum signal in such a way that two or more of the modulated quantum sub-signals have a same signal power.

7. The system (100) of any one of claims 1 to 5, wherein the beam splitter (111) is configured to split the modulated quantum signal in such a way that at least two of the modulated quantum sub-signals have different signal powers.

8. The system (100) of any one of the preceding claims, wherein the transmitter (101) comprises a random number generator (105) for generating the quantum signal.

9. The system (100) of any one of the preceding claims, wherein the post-processing procedure further includes a sifting procedure, a parameter estimation procedure, an information reconciliation procedure and/or a privacy amplification procedure.

10. The system (100) of any one of the preceding claims, wherein each receiver (121-1, 121-2, 121-N) comprises a homodyne detector (123-1, 123-2, 123-N) or a heterodyne detector (123-1, 123-2, 123-N) for determining the plurality of phase space positions defined by the plurality of quadrature components of the respective modulated quantum sub-signal.

11. A passive optical network comprising the CV-QKD system (100) according to any one of the preceding claims.

12. A continuous variable quantum key distribution, CV-QKD, method (400), comprising:
modulating (401) a quantum signal according to a continuous or discrete distribution in phase and amplitude by a transmitter (101);
splitting (403), using a passive beam splitter (111), the modulated quantum signal into a plurality of modulated quantum sub-signals, wherein each modulated quantum sub-signal is an attenuated version of the modulated quantum signal;
transmitting a synchronization signal together with the modulated quantum signal via the beam splitter (111) to each of a plurality of receivers (121-1, 121-2, 121-N).
operating (405) each receiver of the plurality of receivers (121-1, 121-2, 121-N) to:
receive (405a) one of the modulated quantum sub-signals via a quantum communication channel;
determine (405b) a plurality of phase space positions defined by a plurality of quadrature components of the modulated quantum sub-signal; and
determine (405c) an individual secret key between the respective receiver (121-1, 121-2, 121-N) and the transmitter (101) on the basis of the plurality of phase space positions using a post-processing procedure, the post-processing procedure comprising a reverse reconciliation procedure.

## Patentansprüche

1. System (100) für kontinuierliche variable Quantenschlüsselverteilung, CV-QKD, umfassend:
einen Überträger (101), umfassend einen Modulator (103), der dazu konfiguriert ist, ein Quantensignal gemäß einer kontinuierlichen oder diskreten Verteilung in Phase und Amplitude zu modulieren;
einen Strahlteiler (111), der dazu konfiguriert ist, das modulierte Quantensignal in eine Vielzahl modulierter Quantenuntersignale aufzuteilen, wobei der Strahlteiler (111) ein passiver Strahlteiler (111) ist, wobei jedes modulierte Quantenuntersignal eine abgeschwächte Version des modulierten Quantensignals ist; und
eine Vielzahl von Empfängern (121-1, 121-2, 121-N),
wobei der Überträger (101) dazu konfiguriert ist, ein Synchronisationssignal zusammen mit dem modulierten Quantensignal über den Strahlteiler (111) an jeden der Vielzahl von Empfängern (121-1, 121-2, 121-N) zu übertragen; und
wobei jeder Empfänger zu Folgendem konfiguriert ist:
Empfangen, über einen jeweiligen Quantenkommunikationskanal, eines jeweiligen modulierten Quantenuntersignals von dem Strahlteiler (111);
Bestimmen einer Vielzahl von Phasenraumpositionen, die durch eine Vielzahl von Quadraturkomponenten des jeweiligen modulierten Quantenuntersignals definiert wird; und
Bestimmen eines individuellen geheimen Schlüssels auf Grundlage der Vielzahl von Phasenraumpositionen durch Ausführen einer Nachverarbeitungsprozedur, wobei die Nachverarbeitungsprozedur eine umgekehrte Abgleichsprozedur umfasst.

2. System (100) nach Anspruch 1, wobei die umgekehrte Abgleichsprozedur Senden von Fehlerkorrekturinformationen von dem jeweiligen Empfänger (121-1, 121-2, 121-N) an den Überträger (101) über einen jeweiligen klassischen Kommunikationskanal beinhaltet.

3. System (100) nach Anspruch 2, wobei der Überträger (101) dazu konfiguriert ist, den jeweiligen individuellen geheimen Schlüssel auf Grundlage der Fehlerkorrekturinformationen zu bestimmen.

4. System (100) nach einem der vorhergehenden Ansprüche, wobei der Überträger (101) dazu konfiguriert ist, die umgekehrte Abgleichsprozedur mit zwei oder mehr der Empfänger (121-1, 121-2, 121-N) parallel durchzuführen.

5. System (100) nach einem der vorhergehenden Ansprüche, wobei der Überträger (101) dazu konfiguriert ist, die umgekehrte Abgleichsprozedur mit zwei oder mehr der Empfänger (121-1, 121-2, 121-N) unter Verwendung von Zeit-Multiplexing durchzuführen.

6. System (100) nach einem der vorhergehenden Ansprüche, wobei der Strahlteiler (111) dazu konfiguriert ist, das modulierte Quantensignal derart aufzuteilen, dass zwei oder mehr der modulierten Quantenuntersignale eine gleiche Signalleistung aufweisen.

7. System (100) nach einem der Ansprüche 1 bis 5, wobei der Strahlteiler (111) dazu konfiguriert ist, das modulierte Quantensignal derart aufzuteilen, dass mindestens zwei der modulierten Quantenuntersignale unterschiedliche Signalleistungen aufweisen.

8. System (100) nach einem der vorhergehenden Ansprüche, wobei der Überträger (101) einen Zufallszahlenerzeuger (105) zum Erzeugen des Quantensignals umfasst.

9. System (100) nach einem der vorhergehenden Ansprüche, wobei die Nachverarbeitungsprozedur ferner eine Sichtungsprozedur, eine Parameterschätzungsprozedur, eine Informationsabgleichsprozedur und/oder eine Datenschutzverstärkungsprozedur beinhaltet.

10. System (100) nach einem der vorhergehenden Ansprüche, wobei jeder Empfänger (121-1, 121-2, 121-N) einen homodynen Detektor (123-1, 123-2, 123-N) oder einen heterodynen Detektor (123-1, 123-2, 123-N) zum Bestimmen der Vielzahl von Phasenraumpositionen umfasst, die durch die Vielzahl von Quadraturkomponenten des jeweiligen modulierten Quantenuntersignals definiert wird.

11. Passives optisches Netz, umfassend das CV-QKD-System (100) nach einem der vorhergehenden Ansprüche.

12. Verfahren (400) für kontinuierliche variable Quantenschlüsselverteilung, CV-QKD, umfassend:
Modulieren (401) eines Quantensignals gemäß einer kontinuierlichen oder diskreten Verteilung in Phase und Amplitude durch einen Überträger (101);
Aufteilen (403), unter Verwendung eines passiven Strahlteilers (111), des modulierten Quantensignals in eine Vielzahl modulierter Quantenuntersignale, wobei jedes modulierte Quantenuntersignal eine abgeschwächte Version des modulierten Quantensignals ist;
Übertragen eines Synchronisationssignals zusammen mit dem modulierten Quantensignal über den Strahlteiler (111) an jeden einer Vielzahl von Empfängern (121-1, 121-2, 121-N),
Betreiben (405) jedes Empfängers der Vielzahl von Empfängern (121-1, 121-2, 121-N) zu Folgendem:
Empfangen (405a) eines der modulierten Quantenuntersignale über einen Quantenkommunikationskanal;
Bestimmen (405b) einer Vielzahl von Phasenraumpositionen, die durch eine Vielzahl von Quadraturkomponenten des modulierten Quantenuntersignals definiert wird; und
Bestimmen (405c) eines individuellen geheimen Schlüssels zwischen dem jeweiligen Empfänger (121-1, 121-2, 121-N) und dem Überträger (101) auf Grundlage der Vielzahl von Phasenraumpositionen unter Verwendung einer Nachverarbeitungsprozedur, wobei die Nachverarbeitungsprozedur eine umgekehrte Abgleichsprozedur umfasst.

## Revendications

1. Système de distribution de clé quantique à variable continue (100), CV-QKD, comprenant :
un émetteur (101) comprenant un modulateur (103) configuré pour moduler un signal quantique selon une distribution continue ou discrète en phase et en amplitude ;
un séparateur de faisceau (111) configuré pour séparer le signal quantique modulé en une pluralité de sous-signaux quantiques modulés, dans lequel le séparateur de faisceau (111) est un séparateur de faisceau passif (111), dans lequel chaque sous-signal quantique modulé est une version atténuée du signal quantique modulé ; et
une pluralité de récepteurs (121-1, 121-2, 121-N),
dans lequel l'émetteur (101) est configuré pour transmettre un signal de synchronisation conjointement avec le signal quantique modulé par le biais du séparateur de faisceau (111) à chacun de la pluralité de récepteurs (121-1, 121-2, 121-N) ; et
dans lequel chaque récepteur est configuré pour :
recevoir par le biais d'un canal de communication quantique respectif un sous-signal quantique modulé respectif provenant du séparateur de faisceau (111) ;
déterminer une pluralité de positions d'espace de phase définies par une pluralité de composantes en quadrature du sous-signal quantique modulé respectif ; et
déterminer une clé secrète individuelle sur la base de la pluralité de positions d'espace de phase en réalisant une procédure de post-traitement, la procédure de post-traitement comprenant une procédure de réconciliation inverse.

2. Système (100) selon la revendication 1, dans lequel la procédure de réconciliation inverse comporte l'envoi d'informations de correction d'erreur du récepteur respectif (121-1, 121-2, 121-N) à l'émetteur (101) par le biais d'un canal de communication classique respectif.

3. Système (100) selon la revendication 2, dans lequel l'émetteur (101) est configuré pour déterminer la clé secrète individuelle respective sur la base des informations de correction d'erreur.

4. Système (100) selon l'une quelconque des revendications précédentes, dans lequel l'émetteur (101) est configuré pour réaliser la procédure de réconciliation inverse avec deux des récepteurs (121-1, 121-2, 121-N) ou plus en parallèle.

5. Système (100) selon l'une quelconque des revendications précédentes, dans lequel l'émetteur (101) est configuré pour réaliser la procédure de réconciliation inverse avec deux des récepteurs (121-1, 121-2, 121-N) ou plus par multiplexage dans le temps.

6. Système (100) selon l'une quelconque des revendications précédentes, dans lequel le séparateur de faisceau (111) est configuré pour diviser le signal quantique modulé de telle manière que deux des sous-signaux quantiques modulés ou plus aient une même puissance de signal.

7. Système (100) selon l'une quelconque des revendications 1 à 5, dans lequel le séparateur de faisceau (111) est configuré pour diviser le signal quantique modulé de telle manière qu'au moins deux des sous-signaux quantiques modulés aient des puissances de signal différentes.

8. Système (100) selon l'une quelconque des revendications précédentes, dans lequel l'émetteur (101) comprend un générateur de nombres aléatoires (105) pour générer le signal quantique.

9. Système (100) selon l'une quelconque des revendications précédentes, dans lequel la procédure de post-traitement comporte également une procédure de filtrage, une procédure d'estimation de paramètres, une procédure de réconciliation d'informations et/ou une procédure d'amplification de confidentialité.

10. Système (100) selon l'une quelconque des revendications précédentes, dans lequel chaque récepteur (121-1, 121-2, 121-N) comprend un détecteur homodyne (123-1, 123-2, 123-N) ou un détecteur hétérodyne (123-1, 123-2, 123-N) pour déterminer la pluralité de positions d'espace de phase définies par la pluralité de composantes en quadrature du sous-signal quantique modulé respectif.

11. Réseau optique passif comprenant le système CV-QKD (100) selon l'une quelconque des revendications précédentes.

12. Procédé de distribution de clé quantique à variable continue, CV-QKD, (400), comprenant :
la modulation (401) d'un signal quantique selon une distribution continue ou discrète en phase et en amplitude par un émetteur (101) ;
la division (403), à l'aide d'un séparateur de faisceau passif (111), du signal quantique modulé en une pluralité de sous-signaux quantiques modulés, dans lequel chaque sous-signal quantique modulé est une version atténuée du signal quantique modulé ;
la transmission d'un signal de synchronisation conjointement avec le signal quantique modulé par le biais du séparateur de faisceau (111) à chacun d'une pluralité de récepteurs (121-1, 121-2, 121-N).
le fonctionnement (405) de chaque récepteur de la pluralité de récepteurs (121-1, 121-2, 121-N) pour :
recevoir (405a) l'un des sous-signaux quantiques modulés par le biais d'un canal de communication quantique ;
déterminer (405b) une pluralité de positions d'espace de phase définies par une pluralité de composantes en quadrature du sous-signal quantique modulé ; et
déterminer (405c) une clé secrète individuelle entre le récepteur respectif (121-1, 121-2, 121-N) et l'émetteur (101) sur la base de la pluralité de positions d'espace de phase à l'aide d'une procédure de post-traitement, la procédure de post-traitement comprenant une procédure de réconciliation inverse.
